**Europäisches Patentamt**

**European Patent Office**

**Office européen des brevets**

(19)

(11) Veröffentlichungsnummer: **0 154 007**

**A2**

(12) **EUROPÄISCHE PATENTANMELDUNG**

(21) Anmeldenummer: **84114702.8**

(22) Anmeldetag: **04.12.84**

(51) Int. Cl.⁴: **B 60 B 21/10**
**B 60 C 15/02**

(30) Priorität: **08.03.84 DE 3408402**

(43) Veröffentlichungstag der Anmeldung:
**11.09.85 Patentblatt 85/37**

(84) Benannte Vertragsstaaten:
**AT BE CH DE FR GB IT LI LU NL SE**

(71) Anmelder: **Continental Gummi-Werke**
**Aktiengesellschaft**
**Königsworther Platz 1**
**D-3000 Hannover 1(DE)**

(72) Erfinder: **Howind, Volker, Ing.**
**Ulmenweg 11**
**D-3002 Wedemark 8(DE)**

(54) **Felge für ein luftbereiftes Fahrzeugrad.**

(57) Die Erfindung bezieht sich auf eine einteilige Felge für ein luftbereiftes Fahrzeugrad, insbesondere für ein LKW-Rad, deren Felgenkranz seitlich außen jeweils ein sich im wesentlichen nach radial innen erstreckendes Felgenhorn und daneben auf der radial inneren Seite jeweils eine Sitzfläche für einen Reifenwulst aufweist. Zur Sicherung der Reifenwülste auf der Felge auch in extremen Fahrsituationen wird vorgeschlagen, daß der Felgenkranz aus zwei unlösbar miteinander und/oder mit der Radscheibe verbundenen Teilen besteht und daß sich seitlich innen von jedem Felgenhorn jeweils ein einteiliger Klemmring befindet, dessen Außendurchmesser größer ist als der von den Felgenhörnern gebildete Innendurchmesser, daß weiterhin Klemmittel vorhanden sind, mit denen die Klemmringe an den Reifenwülsten fixierbar sind.

EP 0 154 007 A2

Croydon Printing Company Ltd.

Continental Gummi-Werke Aktiengesellschaft, Hannover

Felge für ein luftbereiftes Fahrzeugrad

Die Erfindung betrifft eine einteilige Felge für ein luftbereiftes Fahrzeugrad, insbesondere für ein LKW-Rad, deren Felgenkranz seitlich außen jeweils ein sich im wesentlichen nach radial innen erstreckendes Felgenhorn und daneben auf der radial inneren Seite jeweils eine Sitzfläche für einen Reifenwulst aufweist.

Ein Fahrzeugrad mit einer solchen Felge ist z. B. aus der DE-OS 30 19 742 bekannt. Bei LKW-Rädern werden die Reifen bekanntlich mit wesentlich höheren Betriebsdrücken gefahren als bei PKW-Rädern, und die LKW-Reifen sind insbesondere vom Karkaß- und Wulstaufbau her entsprechend stärker ausgelegt.

Der Erfindung liegt die Aufgabe zugrunde, eine Felge der eingangs genannten Art für einen LKW-Reifen derart auszugestalten, daß ein Reifen mit seinen Wülsten in allen Fahrsituationen sicher auf der Felge gehalten wird.

Diese Aufgabe wird erfindungsgemäß dadurch gelöst, daß der Felgenkranz aus zwei unlösbar miteinander und/oder mit der Radscheibe verbundenen Teilen besteht und daß sich seitlich innen von jedem Felgenhorn jeweils ein einteiliger Klemmring befindet, dessen Außendurchmesser größer ist als der von den Felgenhörnern gebildete Innendurchmesser, daß weiterhin Klemmittel vorhanden sind , mit denen die Klemmringe an den Reifenwülsten fixierbar sind.

Die Erfindung bietet aufgrund des formstabilen einteiligen Klemmrings den Vorteil einer optimalen Fixierung des Reifenwulstes auch bei extrem hohen im Wulstbereich des Reifens auftretenden Zugkräften. Gleichzeitig werden jegliche Axialverschiebungen des Reifenwulstes auf der Felge zuverlässig unterbunden. Für eine leichte Reifenmontage dient ein Montagehochbett, in das der Klemmring und der Reifenwulst eintauchen können.

Nachfolgend wird ein Ausführungsbeispiel der Erfindung anhand einer Zeichnung beschrieben.

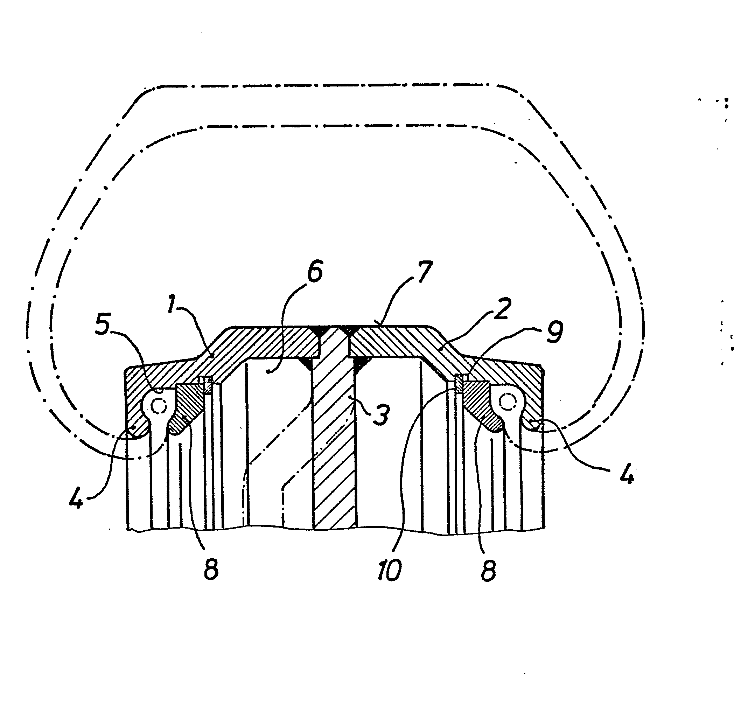

Die einzige Fig. zeigt

eine Felge mit einem strichpunktiert angedeuteten montierten Fahrzeugluftreifen in einem radialen Teilschnitt.

Die Felge besteht aus einem ersten Felgenkranzteil 1, einem zweiten Felgenkranzteil 2 und einer Radscheibe 3, an der die Felgenkranzteile 1, 2 angeschweißt sind. An jedem Felgenkranzteil 1, 2 befindet sich seitlich außen ein radial sich nach innen erstreckendes Felgenhorn 4, das vorliegend auf der axial inneren Seite hinterschnitten ausgebildet ist, und neben diesem auf der radial inneren Seite des Felgenkranzes eine Sitzfläche 5 für einen Reifenwulst.

Im Nachbarbereich der Radscheibe 3 weisen die beiden Felgenkranzteile 1, 2 einen gegenüber den Sitzflächen 5 vergrößerten Durchmesser auf, so daß jeweils ein Montagehochbett 6 für einen Reifenwulst gebildet wird. Die radial äußeren Teile des Felgenkranzes bilden im Bereich der Montagehochbetten 6 eine zylindrische Stützfläche 7 zur Abstützung der Reifenzenitpartie bei einem Notlauf.

Jedem Felgenkranzteil 1,2 ist radial innen ein einteiliger metallischer Klemmring 8 zugeordnet, dessen mittlere Wandstärke bevorzugt etwa der Wandstärke des Felgenkranzes entspricht. Weiterhin kann der vom Klemmring 8 gebildete Innendurchmesser etwa gleich dem von den Felgenhörnern 4 gebildeten Innendurchmesser sein. Der Klemmring 8 dient zur

0154007

Fixierung eines Reifenwulstes in der Betriebsstellung, und er wird von einem in einer Nut 9 gelagerten Sprengring 10 gehalten, so daß in jedem Umfangsabschnitt des Klemmrings 8 gleich hohe Axialkräfte aufgefangen werden können. Bei geringeren Anforderungen kann der Sprengring 10 auch durch mehrere über den Umfang verteilte Schrauben bzw. am Felgenkranz angeschraubte Anschlagsstücke ersetzt sein.

Die Herstellung einer Felge geschieht in folgender Weise: Zunächst werden die beiden Felgenkranzteile 1, 2 gefertigt, bevorzugt gedreht. Anschließend werden die beiden Klemmringe 8 und die beiden Sprengringe 10 in den jeweiligen Innenraum der Felgenkranzteile 1, 2 eingebracht. Erst danach werden die Felgenkranzteile 1, 2 mit der Radscheibe 3 verschweißt und im Rahmen einer Endbearbeitung die Parallelstoß-Schweißnähte überdreht. Die Radscheibe 3 kann bei Bedarf auch die strichpunktiert gezeichnete oder eine andere Form aufweisen.

Zur Montage eines Reifens (strichpunktiert) wird zunächst die Felge im wesentlichen senkrecht zum Reifen auf diesen zubewegt und anschließend im Innenraum gedreht, bis die Rotationsachsen von Reifen und Felge parallel verlaufen. Die Reifenwülste liegen nun seitlich außen von den zugeordneten Felgenhörnern 4. Die weitere Reifenmontage erfolgt nach bekannten Verfahren. Wenn die Reifenwülste sich in der Betriebsstellung auf den Felgensitzflächen 5 befinden, werden die Klemmringe 8 gegen die Wülste gedrückt und mit Hilfe der Sprengringe 10 in dieser Position gesichert. Die Sprengringe 10 können bei Bedarf auch nach dem Zusammenschweißen der Felge montiert werden.

Vorliegend sind im Bereich der Reifenwülste außer den Felgenhörnern 4 auch die Klemmringe 8 hinterschnitten ausgebildet, so daß bei hohen Zugkräften an der Reifenseitenwand der Reifenwulst in dem sich ver-engenden Spalt immer stärker verklemmt wird. Im Rahmen einer zweiten Funktion hindert der Klemmring 8 den Reifenwulst bei Auftreten von axialen Schubkräften an einer Verschiebung nach axial innen.

0154007

Ansprüche

1. Einteilige Felge für ein luftbereiftes Fahrzeugrad, insbesondere für ein LKW-Rad, deren Felgenkranz seitlich außen jeweils ein sich im wesentlichen nach radial innen erstreckendes Felgenhorn und daneben auf der radial inneren Seite jeweils eine Sitzfläche für einen Reifenwulst aufweist, dadurch gekennzeichnet, daß der Felgenkranz aus zwei unlösbar miteinander und/oder mit der Radscheibe (3) verbundenen Teilen (1, 2) besteht und daß sich seitlich innen von jedem Felgenhorn (4) jeweils ein einteiliger Klemmring (8) befindet, dessen Außendurchmesser größer ist als der von den Felgenhörnern (4) gebildete Innendurchmesser, daß weiterhin Klemmmittel (10) vorhanden sind mit denen die Klemmringe (8) an den Reifenwülsten fixierbar sind.

2. Felge nach Anspruch 1, dadurch gekennzeichnet, daß die Klemmittel aus jeweils einem in einer Nut (9) befindlichen Sprengring (10) · bestehen.

3. Felge nach Anspruch 1, dadurch gekennzeichnet, daß die beiden Teile (1, 2) des Felgenkranzes an der Radscheibe (3) angeschweißt sind.

4. Felge nach Anspruch 1, dadurch gekennzeichnet, daß das Felgenhorn (4) und/oder der Klemmring (8) in dem Bereich, der am Reifenwulst anliegt, hinterschnitten ausgebildet ist.

5. Felge nach Anspruch 1, dadurch gekennzeichnet, daß der vom Klemmring (8) gebildete Innendurchmesser etwa dem vom Felgenhorn (4) gebildeten Innendurchmesser entspricht.

6. Verfahren zur Herstellung einer Felge nach Anspruch 1, dadurch gekennzeichnet, daß zunächst je ein Klemmring (8) in den von jedem Felgenkranzteil (1, 2) gebildeten Innenraum gebracht wird und daß anschließend die beiden Felgenkranzteile (1, 2) miteinander und/oder mit der Radscheibe (3) verschweißt werden.

Hannover, den 29. Februar 1984
Akte: 3490                   Sr/Bu

Continental
Gummi – Werke AG
Hannover

84 – 12 P